# EUROPEAN PATENT SPECIFICATION

(11) **EP 1 235 156 B1**
(45) Date of publication and mention of the grant of the patent: **17.09.2003**
(21) Application number: 01128559.0
(22) Date of filing: 30.11.2001
(51) Int. Cl.: G06F 13/38

(54) **Remote management unit with interface for remote data exchange**
Fernverwaltungseinheit mit einer Schnittstelle zum Ferndatenaustausch
Unité de gestion à distance avec interface pour échange de données à distance

(43) Date of publication of application: 28.08.2002
(73) Proprietor: Agilent Technologies, Inc. (a Delaware corporation), Palo Alto, CA 94303 (US)
(72) Inventor: Metzger, Michael, 72202 Nagold (DE); Dippon, Thomas, 71116 Gärtringen (DE); Hubert, Christian, 33102 Paderborn (DE)
(74) Representative: Barth, Daniel Mathias

(56) References cited:
- EP-A- 1 052 805
- US-A- 5 961 594
- US-A- 6 052 785
- US-A- 6 112 235

## Description

### BACKGROUND OF THE INVENTION

The present invention relates to Remote Management Units (RMUs) for remote managing a local data processing unit from a remote data processing unit.

An RMU is disclosed e.g. in EP-A-962862 by the same applicant. Amongst other applications, a memory of such RMU can be loaded from remote with data. The local DPU can then be configured in a way that it can access the RMU memory and e.g. download the stored data content. Such downloading from the RMU memory is in particular useful for providing a boot process of the local DPU from remote by the remote DPU.

### SUMMARY OF THE INVENTION

It is an object of the present invention to provide an improved remote management unit. The object is solved by the independent claims. Preferred embodiments are shown by the dependent claims.

According to the present invention, a remote management unit (RMU) is provided for managing a local data processing unit (DPU) from remote by a remote data processing unit. The RMU is coupled to or connected with the local DPU preferably by means of a local bus of the local DPU. The remote DPU is coupled to or connected with the RMU by means of an external network, such as LAN, WAN, etc., which might by wired or wireless.

The RMU comprises a data exchange interface for providing a data exchange between the local DPU and a remote data carrier (such as a server, memory, disc, dedicated storage devices, CDs, removable discs, etc.) connected with the RMU through the external network. The remote data carrier can be a unit independent of the remote DPU or a part thereof. In either case, the remote data carrier (RDC) preferably also comprises an individual RDC data exchange interface for independently executing data exchange through the external network.

For providing a data exchange between the local DPU and the remote data carrier, the data exchange interface (of the RMU) will be configured in a way that the local DPU regards the data exchange interface as representing or providing a standard interface of a data carrier type known by the local DPU. Such known data carrier type might be, for example, a SCSI disc, floppy disc, CD-ROM, IDE-disk, or similar data storage devices typically available in a computer environment. On the other side, the data exchange interface will further be configured to provide a data exchange of the RMU with the remote data carrier through the external network. The data exchange interface of the RMU is configured before providing the data exchange, preferably by the remote DPU, the remote data carrier, or the local DPU.

The network connection between RMU, remote DPU, and remote data carrier is not limited to a private network but can include the public Internet including routers, proxies, firewalls, etc.

Data content to be accessed by the local data processing unit will be preferably provided within the remote data carrier already having an appropriate data format corresponding to a data carrier format of the data carrier type as represented by the data exchange interface towards the local data processing unit. However, adequate data format conversion units for providing the required data format conversion might be applied accordingly, which might be accessed through the external network and can be part of the remote DPU or the RMU.

The invention thus provides an improved data exchange between the local DPU and the remote data carrier controlled by the remote DPU through the RMU. For applications such as rebooting the local DPU from the RMU, the invention thus overcomes limitations in local RMU memory space.

In order to facilitate the data exchange provided by the data exchange interface, the RMU might further comprise a local memory (preferably a cache memory) allowing temporarily buffering data. However, such local RMU memory is not necessary for executing the invention, and the data exchange interface can be configured for providing the data exchange between the remote data carrier and the local DPU without buffering or temporarily storing data.

The data exchange interface is thus capable of representing itself to the local DPU as standard data carrier type. This can be achieved by a combination of hardware and software components. In a similar fashion, the remote data carrier preferably already holds images of the corresponding data carrier type in its storage space. If, for instance, the data exchange interface represents itself as SCSI-disc with FAT file system, the file data image of the remote data carrier must be the file image of a SCSI based FAT file system. Those images can be easily generated using commercially available standard tools.

In a preferred embodiment, the role of the remote DPU is to properly configure the data exchange interface of the RMU and the data exchange interface of the remote data carrier. Configuration items may include the data format, whether or not the data represents a bootable image, the cache size, as well as security and login options. If in a particular system, for example, there is only one kind of data exchange interface and file system type implemented, this configuration process can also be omitted.

In a preferably embodiment, the RMU in conjunction with the remote data carrier 'act' as a bootable device for the local DPU, controlled by the remote DPU. The data format and content of the remote data carrier are provide adequate for the purpose of the local DPU, and the RMU is configured such that it presents itself as a bootable device to the local DPU. This can be achieved by flagging the data exchange interface as "bootable" device. This can be performed solely by adequate software tools and must follow the rules for bootable devices of the local DPU, for example hooking INT13 for INTEL based architectures.

It is clear that the invention can be partly or entirely embodied or supported by one or more suitable software programs, which can be stored on or otherwise provided by any kind of data carrier, and which might be executed in or by any suitable data processing unit.

### BRIEF DESCRIPTION OF THE DRAWINGS

Other objects and many of the attendant advantages of the present invention will be readily appreciated and become better understood by reference to the following detailed description when considering in connection with the accompanied drawing.

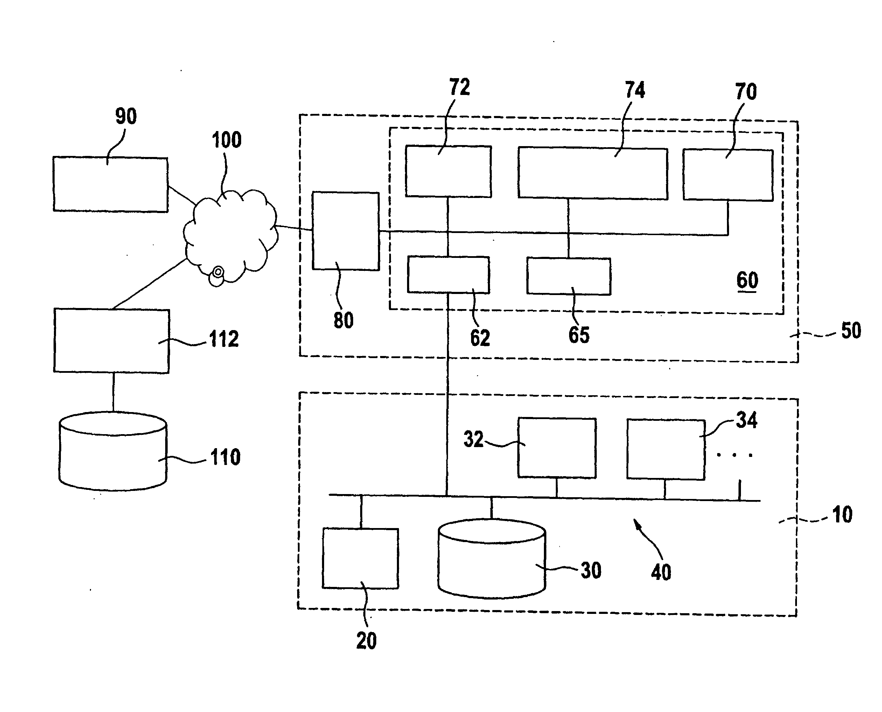

Figure 1 illustrates the invention using a generalized block diagram representation.

### DETAILED DESCRIPTION OF THE INVENTION

In Figure 1, a local DPU 10 comprises a central processing unit (CPU) 20, a local memory 30, an OS Driver 32, and a BIOS 34, each connected to a local bus 40, such as a PCI bus, PCI-X, ISA, 3GI0, or any other bus system.

An RMU 50 comprises a data exchange interface 60 being provided by an interface 62, a CPU 65, an optional cache 70, a configuration data unit 72, a read/write request processing unit 74, and a network interface 80, each connected by an internal bus 90. The local DPU 10 and/or the RMU 50 might comprise further components, which, however, are omitted here for the sake of simplicity.

It is to be understood that Fig. 1 illustrates a logical representation with an assignment of features to either unit based on a logical separation of RMU- and DPU-functionalities. However, this does not necessarily mean or require physical separation of individual hardware or software components. For example, the interface 62 might be provided as hardware interface physically located within the local DPU 10. Features that would be part of the local DPU 10 without having the RMU 50 coupled are therefore 'assigned' to the local DPU 10 while features 'added' by coupling the RMU 50 are 'assigned' to the RMU 50.

The RMU 50 can be controlled by a remote DPU 90 connected with the RMU 50 by means of an external network 100, such as a LAN, WAN, etc. A remote data carrier 110 is also connected to the external network 100 or is part of the remote DPU 90. Similar to the RMU 50, the remote data carrier 100 comprises a RDC data exchange interface 112 representing the "counterpart" to the data exchange interface 60 of the RMU 50. Other components might be further connected to the external network 100 but are also omitted herein for the sake of simplicity.

In operation for providing a data exchange between the remote data carrier 110 and the local DPU 10 (which can be in either direction), the remote DPU 90 first configures the data exchange interface 60 by storing the network address of the remote DPU 90 and the remote data exchange interface 112 as well as other information pertinent to the data exchange (e.g. filename of the image) at the configuration unit 72. After configuration, the data exchange interface 60 will appear to the local DPU 10 as a standard interface for providing a data exchange with a data carrier type known to the local DPU 10. Such known data carrier type might be IDE, SCSI, CD-ROM, etc. In other words, after configuration the local DPU 10 will virtually "see" the data exchange interface 60 as such data carrier of the known type.

In case that data from the remote data carrier 110 is to be provided to the local DPU 10 or, in other words, in case the local DPU 10 wants to read from the 'virtual' data carrier represented by the data exchange interface 60 towards the local DPU 10, such data stored in the remote data carrier 110 have to provided in a data format corresponding to a data format of the virtual data carrier type. Alternatively, a data format conversion unit (not shown in the figures) might be provided in the external network 100 (or by the RMU 50 or the remote DPU 90) for correspondingly converting data formats.

After configuring the data exchange interface 60, a data exchange between the local DPU 10 and the remote data carrier 110 can be initiated. For reading from the remote data carrier 110, the local DPU 10 will read from the virtual data carrier represented by the data exchange interface 60, and the data exchange interface 60 itself will read correspondingly from the remote data carrier 110 through the external network 100.

Correspondingly, the local DPU 10 might want to store data to the virtual data carrier represented by the data exchange interface 60 and thus to the virtual data carrier 110. For that purpose, the local DPU 10 will send data in the adequate data format of the virtual data carrier to the data exchange interface 60, which will then store that data to the remote data carrier 110. In an example, read/write requests issued by the local DPU 10 are sent through the interface 62 to the RMU 50. The read/write processing unit 74 converts these requests into an appropriate network protocol and transmits them through the network interface 80 to the remote data carrier 110. As an example, for such a network protocol, the iSCSI protocol could be used. The remote data carrier 110 will unpack the read/write requests from the networking protocol and will execute the respective requests. For communication from the remote data carrier 110 back to the local DPU 10, the remote data carrier 110 will use the same technique as the RMU 50, namely embedding the requested data in the networking protocol. The read/write processing unit of the RMU 50 will then unpack the information delivered by the remote data carrier 110, convert it into the corresponding data format, if necessary, and present it to the local DPU 10 through the interface 62.

For performance reasons, the RMU 50 might use the optional cache 70 of variable size for buffering and/or caching data as well-known in the art.

The aforedescribed reading of the local DPU 10 from the remote data carrier 110 by means of the data exchange interface 60 of the RMU 50 is in particular useful for providing a boot operation of the local DPU 10 controlled by the remote DPU 90. For that purpose, the remote DPU 90 will first configure the local DPU 10 to "see" the data exchange interface 60 connected to the internal bus 40 of the local DPU 10 as an adequate bootable drive for executing a boot operation. For standard personal computer applications, such bootable drive types are normally a floppy disc (drive A:\), a hard disc, or a CD-ROM.

In accordance with the setting of the local DPU 10 for seeing such bootable drive in the data exchange interface 60, the remote DPU 90 will further configure the data exchange interface 60 in the aforedescribed manner in order to virtually provide such bootable drive towards the local DPU 10 and further to allow the data exchange interface 60 to access the remote data carrier 110. The remote DPU 90 will further provide adequate data content required for the boot operation in the data format of the virtual bootable drive to the remote data carrier 110, if not already contained therein.

In case that data contained in the remote data carrier 110 might not be in the expected data format, the remote DPU might further provide a data format conversion or instruct an adequate unit within the external network 100 (including the RMU 50) to provide such data format conversion. Thus, the remote DPU 90 can boot up the local DPU 10 from remote through the RMU 50 without requiring a direct interaction from side of the local DPU 10.

Alternatively or in addition to an executed boot operation, the remote DPU 90 can also efficiently load data to the local DPU 10 (e.g. to the local memory 30) through the RMU 50. This can be in particular advantageous for configuring the local DPU 10 from remote e.g. for installation of operating systems loading programs or other data to the local DPU 10.

## Claims

1. A remote management unit - RMU - (50) adapted for managing a local data processing unit - DPU - (10) from remote by a remote DPU (90), the RMU (50) being adapted to be coupled to the remote DPU (90) by means of a network (100) external with respect to the local DPU (10), and the RMU (50) being coupled with the local DPU (10) through an internal bus of the local DPU (10), the RMU (50) comprising:
a data exchange interface (60) for providing a data exchange between the local DPU (10) and a remote data carrier (110) coupled with the RMU (50) through the external network (100),
wherein the data exchange interface (60) is adapted to be configured:
(a) So that the local DPU (10) regards the data exchange interface (60) as representing or providing a standard interface of a data carrier type known by the local DPU (10), and
(b) to provide a data exchange of the RMU (50) with the remote data carrier (110) through the external network (100) for executing the data exchange between the local DPU (10) and the remote data carrier (110).

2. The RMU (50) of claim 1 being coupled to or connected with the local DPU (10) by means of a local bus (40) of the local DPU 10).

3. The RMU (50) of claim 1 or 2, further comprising a local memory for temporarily buffering and/or caching data.

4. A system for providing a data exchange between a local data processing unit - DPU - (10) and a remote data carrier (110), comprising:
a remote DPU (90),
a remote management unit - RMU - (50) according to claim 1 or any one of the above claims, being coupled to the local DPU (10) and adapted for managing the local DPU (10) from remote by the remote DPU (90) and for providing the data exchange between the local DPU (10) and the remote data carrier (110),
wherein the remote DPU (90), the remote data carrier (110), and the RMU (50) are coupled through a network (100) external with respect to the local DPU (10), and the RMU (50) is coupled with the local DPU (10) through an internal bus of the local DPU (10).

5. A method for providing a data exchange between a local data processing unit - DPU - (10) and a remote data carrier (110) in a system comprising a remote management unit - RMU - (50) coupled to the local DPU (10) and adapted for managing the local DPU (10) from remote by a remote DPU (90), wherein the remote DPU (90), the remote data carrier (110), and the RMU (50) are coupled through an external network (100), the method comprising the steps of:
(a) configuring a data exchange interface (60) of the RMU (50) in a way that the local DPU (10) regards the data exchange interface (60) as representing or providing a standard interface of a data carrier type known by the local DPU (10),
(b) providing a data exchange of the RMU (50) with the remote data carrier (110) through the external network (100) for executing the data exchange between the local DPU (10) and the remote data carrier (110).

6. The method of claim 5, wherein step (b) comprises the steps of:
- providing a data exchange between the local DPU (10) and the data exchange interface (60) in accordance with a virtual data exchange between the local DPU (10) and a data carrier of the type as represented by the data exchange interface (60) towards the local DPU (10), and
- providing a data exchange between the data exchange interface (60) and the remote data carrier (110) through the external network (100).

7. The method of claim 5 or 6, wherein step (a) is executed by the remote DPU (90).

8. The method of claim 5 or any one of the above claims 6-7, further comprising a step of providing a data content to be accessed for the local DPU (10) in the remote data carrier (110), the data content having an appropriate data format corresponding to a data carrier format of the data carrier type as represented by the data exchange interface (60) towards the local DPU (10).

9. The method of claim 8, wherein the data content in the appropriate data format is provided in the remote data carrier (110) before being accessed from the RMU (50), or wherein a data format conversion of the data content into the appropriate data format is provided after being accessed from the RMU (50).

10. The method of claim 5 or any one of the above claims 6-9, wherein the data exchange between the local DPU (10) and the remote data carrier (110) comprises loading a data content to the local DPU (10) by means of the RMU (50) controlled from remote by the remote DPU (90), and wherein:
step (a) comprises the steps of configuring - through the network (100) external with respect to the local DPU (10) - the data exchange interface (60) of the RMU (50) in a way that the local DPU (10) regards the data
exchange interface (60) as representing or providing a standard interface of a virtual data carrier of a type known by the local DPU (10), and
step (b) comprises the steps of initiating the local DPU (10) to virtually read the data content from the virtual data carrier as represented by the data exchange interface (60) to the local DPU (10), whereby the data exchange interface (60) requests and receives the data content from the remote data carrier (110) through the external network (100) and provides the received data content to the focal DPU (10) in a data format corresponding to a data format of the virtual data carrier.

11. The method of claim 10, further comprising a step of providing the data content to the remote data carrier (110).

12. The method of claim 5 or any one of the above claims 6-9, wherein the data exchange between the local DPU (10) and the remote data carrier (110) comprises booting the local DPU (10) from remote by the remote DPU (90), and wherein:
step (a) comprises the steps of configuring the data exchange interface (60) of -the RMU (50) in a way that the local DPU (10) regards the data exchange interface (60) as representing or providing a standard bootable drive of a virtual data carrier of a type known by the local DPU (10), the RMU (50) being coupled with the remote DPU (90) through the network (100) external with respect to the local DPU (10), and the RMU (50) being coupled with the local DPU (10) through an internal bus of the local DPU (10), and
step (b) comprises the steps of initiating the local DPU (10) to virtually boot from the virtual data carrier as represented by the data exchange interface (60) to the local DPU (10), whereby the data exchange interface (60) requests and receives data content requested by the local DPU (10)
from the remote data carrier (110) through the external network (100) and provides the received data content to the local DPU (10) in a data format corresponding to a data format of the virtual data carrier.

13. A software program or product, preferably stored on a data carrier, for executing the method of claim 5 or any one of the above claims 6-12, when run on a data processing system such as a computer.

## Patentansprüche

1. Eine Fernverwaltungseinheit -remote management unit - RMU-(50), angepasst zum Verwalten einer lokalen Datenverarbeitungseinheit -DPU- (10) von fern durch eine entfernte DPU (90), wobei die RMU (50) angepasst ist, an die entfernte DPU (90) gekoppelt zu werden durch ein Netzwerk (100), welches im Hinblick auf die lokale DPU (10) extern ist, und die DPU (50) an die lokale DPU (10) gekoppelt wird durch einen internen Bus der lokalen DPU (10); die RMU (50) weist auf:
eine Datenaustauschschnittstelle (60) zum Herstellen eines Datenaustausches zwischen der lokalen DPU (10) und einem entfernten Datenträger (110), der mit der RMU (50) durch das externe Netzwerk (100) gekoppelt ist,
wobei die Datenaustauschschnittstelle (60) angepasst ist, konfiguriert zu werden:
(a) so dass die lokale DPU (10) die Datenaustauschschnittstelle (60) betrachtet als Darstellung oder Herstellung einer Standardschnittstelle eines der lokalen DPU (10) bekannten Datenträgertyps, und
(b) zum Herstellen eines Datenaustausches der RMU (50) mit dem entfernten Datenträger (110) durch das externe Netzwerk (100) zum Ausführen des Datenaustauschs zwischen der lokalen DPU (10) und dem entfernten Datenträger (110).

2. Die RMU (50) nach Anspruch 1 gekoppelt an oder verbunden mit der lokalen DPU (10) durch einen lokalen Bus (40) der lokalen DPU (10).

3. Die RMU (50) nach Anspruch 1 oder 2 mit zusätzlich einem lokalen Speicher zum temporären Puffern und/oder Cachen von Daten.

4. Ein System zum Herstellen eines Datenaustauschs zwischen einer lokalen Datenverarbeitungseinheit - DPU - (10) und einem entfernten Datenträger (110), mit:
einer entfernten DPU (90),
einer Fernverwaltungseinheit - RMU - (50) nach Anspruch 1 oder einem der genannten Ansprüche, welche gekoppelt wird an die lokale DPU (10) und angepasst ist zum Verwalten der lokalen DPU (10) von außen durch die entfernte DPU (90) und zum Herstellen des Datenaustauschs zwischen der lokalen DPU (10) und dem entfernten Datenträger (110),
wobei die entfernte DPU (90), der entfernte Datenträger (110) und die RMU (50) gekoppelt sind durch ein Netzwerk (100), welches im Hinblick auf die lokale DPU (10) extern ist, und die RMU (50) gekoppelt ist mit der lokalen DPU (10) durch einen internen Bus der lokalen DPU (10).

5. Ein Verfahren zum Herstellen eines Datenaustauschs zwischen einer lokalen Datenverarbeitungseinheit - DPU - (10) und einem entfernten Datenträger (100) in einem System, welches eine entfernte Verwaltungseinheit - RMU - (50) aufweist, welche an die lokale DPU (10) gekoppelt ist und angepasst ist zum Verwalten der lokalen DPU (10) von außen durch eine entfernte DPU (90), wobei die entfernte DPU (90), der entfernte Datenträger (110) und die RMU (50) gekoppelt sind durch ein externes Netzwerk (100); das Verfahren weist folgende Schritte auf:
(a) Konfigurieren einer Datenaustauschschnittstelle (60) der RMU (50), so dass die lokale DPU (10) die Datenaustauschschnittstelle (60) betrachtet als Darstellung oder Herstellung einer Standardschnittstelle eines der lokalen DPU (10) bekannten Datenträgertyps, und
(b) Herstellen eines Datenaustausches der RMU (50) mit dem entfernten Datenträger (110) durch das externe Netzwerk (100) zum Ausführen des Datenaustauschs zwischen der lokalen DPU (10) und dem entfernten Datenträger (110).

6. Das Verfahren nach Anspruch 5, wobei Schritt (b) folgende Schritte aufweist:
- Herstellen eines Datenaustauschs zwischen der lokalen DPU (10) und der Datenaustauschschnittstelle (60) in Übereinstimmung mit einem virtuellen Datenaustausch zwischen der lokalen DPU (10) und einem Datenträger der Art wie dargestellt durch die Datenaustauschschnittstelle (60) gegenüber der lokalen DPU (10), und
- Herstellen eines Datenaustauschs zwischen der Datenaustauschschnittstelle (60) und dem entfernten Datenträger (110) durch das externe Netzwerk (100).

7. Das Verfahren nach Anspruch 5 oder 6, wobei Schritt (a) ausgeführt wird durch die entfernte DPU (90).

8. Das Verfahren nach Anspruch 5 oder einem der Ansprüche 6-7 mit zusätzlich einem Schritt zum Herstellen eines Dateninhalts, auf den zugegriffen werden kann, für die lokale DPU (10) in dem entfernten Datenträger (110), wobei der Dateninhalt ein geeignetes Datenformat hat, welches dem Datenträgerformat des Datenträgertyps entspricht wie dargestellt von der Datenaustauschschnittstelle (60) gegenüber der lokalen DPU (10).

9. Das Verfahren nach Anspruch 8, wobei der Dateninhalt in dem geeigneten Datenformat in dem entfernten Datenträger (110) geliefert wird, bevor von der RMU (50) darauf zugegriffen wird, oder
wobei eine Datenformatumwandlung des Dateninhalts in das entsprechende Datenformat erfolgt, nachdem die RMU (50) darauf zugegriffen hat.

10. Das Verfahren nach Anspruch 5 oder einem der Ansprüche 6-9,
wobei der Datenaustausch zwischen der lokalen DPU (10) und dem entfernten Datenträger (110) das Laden eines Dateninhalts an die lokale DPU (10) umfasst durch die RMU (50), die von außen von der entfernten DPU (90) kontrolliert wird, und wobei:
Schritt (a) die Schritte aufweist, die Datenaustauschschnittstelle (60) der RMU (50) - durch das Netzwerk (100), das im Hinblick auf die lokale DPU (10) extern ist - so zu konfigurieren, dass die lokale DPU (10) die Datenaustauschschnittstelle (60) betrachtet als Darstellung oder Herstellung einer Standardschnittstelle eines virtuellen Datenträgers eines der lokalen DPU (10) bekannten Typs, und
Schritt (b) die Schritte aufweist, die lokale DPU (10) zu initialisieren zum virtuellen Lesen des Dateninhalts von dem virtuellen Datenträger wie dargestellt durch die Datenaustauschschnittstelle (60) an die lokale DPU (10), wobei die Datenaustauschschnittstelle (60) von dem entfernten Datenträger (110) durch das externe Netzwerk (100) den Dateninhalt anfordert und empfängt und den empfangenen Dateninhalt an die lokale DPU (10) liefert in einem Datenformat, welches einem Datenformat des virtuellen Datenträgers entspricht.

11. Das Verfahren nach Anspruch 10 mit zusätzlich einem Schritt, den Dateninhalt an den entfernten Datenträger (110) zu übermitteln.

12. Das Verfahren nach Anspruch 5 oder einem der Ansprüche 6-9,
wobei der Datenaustausch zwischen der lokalen DPU (10) und dem entfernten Datenträger (110) das Booten der lokalen DPU (10) von außen durch die entfernte DPU (90) einschließt, und wobei
Schritt (a) die Schritte aufweist, die Datenaustauschschnittstelle (60) der RMU (50) zu konfigurieren, so dass die lokale DPU (10) die Datenaustauschschnittstelle (60) betrachtet als Darstellung oder Herstellung eines bootbaren Standardlaufwerks eines virtuellen Datenträgers eines der lokalen DPU (10) bekannten Typs, wobei die RMU (50) gekoppelt ist mit der entfernten DPU (90) durch das Netzwerk (100), welches im Hinblick auf die lokale DPU (10) extern ist, und die RMU (50) gekoppelt ist an die lokale DPU (10) durch einen internen Bus der lokalen DPU (10), und
Schritt (b) die Schritte aufweist, die lokale DPU (10) zu initialisieren, um von dem virtuellen Datenträger virtuell zu booten, wie dargestellt durch die Datenaustauschschnittstelle (60) an die lokale DPU (10), wobei die Datenaustauschschnittstelle (60) Dateninhalte anfordert und empfängt, welche von der lokalen DPU (10) angefordert wurden von dem entfernten Datenträger (110) durch das externe Netzwerk (100) und den empfangenen Dateninhalt an die lokale DPU (10) liefert in einem Datenformat, welches einem Datenformat des virtuellen Datenträgers entspricht.

13. Ein Softwareprogramm oder -produkt, vorzugsweise gespeichert auf einem Datenträger, zum Durchführen des Verfahrens nach Anspruch 5 oder einem der Ansprüche 6-12, wenn auf einem Datenverarbeitungssystem wie einem Computer durchgeführt wird.

## Revendications

1. Unité de gestion à distance - RMU - (50) adaptée pour la gestion d'une unité de traitement des données locale - DPU - (10) à distance par une DPU à distance (90), la RMU (50) étant adaptée pour être couplée à la DPU à distance (90) au moyen d'un réseau (100) externe concernant la DPU locale (10), et la RMU (50) étant couplée à la DPU locale (10) par le biais d'un bus interne de la DPU locale (10), la RMU (50) comprenant :
une interface d'échange de données (60) pour permettre un échange de données entre la DPU locale (10) et un support de données à distance (110) couplé à la RMU (50) par le biais du réseau externe (100),
où l'interface d'échange de données (60) est adaptée pour être configurée :
(a) de façon à ce que la DPU locale (10) considère l'interface d'échange de données (60) comme représentant ou fournissant une interface standard d'un type de support de données connu par la DPU locale (10), et
(b) pour permettre un échange de données de la RMU (50) avec le support de données à distance (110) par le biais du réseau externe (100) pour l'exécution de l'échange de données entre la DPU locale (10) et le support de données à distance (110).

2. La RMU (50) de la revendication 1 étant couplée ou connectée à la DPU locale (10) au moyen d'un bus local (40) de la DPU locale (10).

3. La RMU (50) de la revendication 1 ou 2, comprenant en outre une mémoire locale pour la mise en mémoire tampon et/ou en mémoire cache temporaire des données.

4. Système pour permettre un échange de données entre une unité de traitement des données locale - DPU - (10) et un support de données à distance (110), comprenant :
une DPU à distance (90),
une unité de gestion à distance - RMU - (50) selon la revendication 1 ou l'une des revendications ci-dessus, étant couplée à la DPU locale (10) et adaptée pour gérer la DPU locale (10) à distance par la DPU à distance (90) et pour permettre l'échange de données entre la DPU locale (10) et le support de données à distance (110),
où la DPU à distance (90), le support de données à distance (110) et la RMU (50) sont couplés par le biais d'un réseau (100) externe concernant la DPU locale (10), et la RMU (50) est couplée à la DPU locale (10) par le biais d'un bus interne de la DPU locale (10).

5. Méthode pour permettre un échange de données entre une unité de traitement des données locale - DPU - (10) et un support de données à distance (110) dans un système comprenant une unité de gestion à distance - RMU - (50) couplée à la DPU locale (10) et adaptée pour la gestion de la DPU locale (10) à distance par une DPU à distance (90), où la DPU à distance (90), le support de données à distance (110) et la RMU (50) sont couplés par le biais d'un réseau externe (100), la méthode comprenant les étapes pour :
(a) configurer une interface d'échange de données (60) de la RMU (50) de façon à ce que la DPU locale (10) considère l'interface d'échange de données (60) comme représentant ou fournissant une interface standard d'un type de support de données connu par la DPU locale (10),
(b) permettre un échange de données de la RMU (50) avec le support de données à distance (110) par le biais du réseau externe (100) pour l'exécution de l'échange de données entre la DPU locale (10) et le support de données à distance (110).

6. Méthode de la revendication 5, où l'étape (b) comprend les étapes pour :
- permettre un échange de données entre la DPU locale (10) et l'interface d'échange de données (60) selon un échange de données virtuel entre la DPU locale (10) et un support de données du type conforme à l'interface d'échange de données (60) vers la DPU locale (10), et
- permettre un échange de données entre l'interface d'échange de données (60) et le support de données à distance (110) par le biais du réseau externe (100).

7. Méthode de la revendication 5 ou 6, où l'étape (a) est exécutée par la DPU à distance (90).

8. Méthode de la revendication 5 ou de l'une des revendications 6-7 ci-dessus, comprenant en outre une étape pour permettre l'accès au contenu de données pour la DPU locale (10) dans le support de données à distance (110), le contenu de données ayant un format de données approprié correspondant à un format du support de données du type de support de données conforme à l'interface d'échange de données (60) vers la DPU locale (10).

9. Méthode de la revendication 8, où le contenu de données dans le format de données approprié est transmis dans le support de données à distance (110) avant l'accès par la RMU (50), ou bien où une conversion du format de données du contenu de données dans le format de données approprié est permise après l'accès par la RMU (50).

10. Méthode de la revendication 5 ou de l'une des revendications 6-9 ci-dessus, où l'échange de données entre la DPU locale (10) et le support de données à distance (110) comprend le chargement d'un contenu de données sur la DPU locale (10) au moyen de la RMU (50) contrôlée à distance par la DPU à distance (90), et où :
l'étape (a) comprend les étapes de configuration - par le biais du réseau (100) externe concernant la DPU locale (10) - de l'interface d'échange de données (60) de la RMU (50) de façon à ce que la DPU locale (10) considère l'interface d'échange de données (60) comme représentant ou fournissant une interface standard d'un support de données virtuel d'un type connu par la DPU locale (10), et
l'étape (b) comprend les étapes d'initialisation de la DPU locale (10) pour lire virtuellement le contenu de données à partir du support de données virtuel conforme à l'interface d'échange de données (60) sur la DPU locale (10), où l'interface d'échange de données (60) demande et reçoit le contenu de données du support de données à distance (110) par le biais du réseau externe (100) et transmet le contenu de données reçu à la DPU locale (10) dans un format de données correspondant au format de données du support de données virtuel.

11. Méthode de la revendication 10, comprenant en outre une étape de transmission du contenu de données au support de données à distance (110).

12. Méthode de la revendication 5 ou de l'une des revendications 6-9 ci-dessus, où l'échange de données entre la DPU locale (10) et le support de données à distance (110) comprend le réamorçage de la DPU locale (10) à distance par la DPU à distance (90), et où :
l'étape (a) comprend les étapes de configuration de l'interface d'échange de données (60) de - la RMU (50) de façon à ce que la DPU locale (10) considère l'interface d'échange de données (60) comme représentant ou fournissant une unité amorçable standard d'un support de données virtuel d'un type connu par la DPU locale (10), la RMU (50) étant couplée à la DPU à distance (90) par le biais du réseau (100) externe concernant la DPU locale (10), et la RMU (50) étant couplée à la DPU locale (10) par le biais d'un bus interne de la DPU locale (10), et
l'étape (b) comprend les étapes d'initialisation de la DPU locale (10) pour la réamorcer virtuellement à partir du support de données virtuel conforme à l'interface de données (60) sur la DPU locale (10), où l'interface d'échange de données (60) demande et reçoit le contenu de données demandé par la DPU locale (10) à partir du support de données à distance (110) par le biais du réseau externe (100) et transmet le contenu de données reçu à la DPU locale (10) dans un format de données correspondant au format de données du support de données virtuel.

13. Programme ou produit logiciel, de préférence stocké sur un support de données, pour l'exécution de la méthode de la revendication 5 ou de l'une des revendications 6-12 ci-dessus, lorsqu'il est exécuté sur un système de traitement des données tel qu'un ordinateur.
